# EUROPÄISCHE PATENTANMELDUNG

(11) **EP 4 112 531 A1**
(43) Veröffentlichungstag der Anmeldung: **04.01.2023**
(21) Anmeldenummer: 22175297.5
(22) Anmeldetag: 25.05.2022
(51) Int. Cl.: B66D 1/54, B66D 1/60, G01M 99/00

(54) **SEILWINDENPRÜFVORRICHTUNG, FORSTGERÄT MIT EINER FORSTSEILWINDE, SYSTEM UND VERFAHREN ZUR PRÜFUNG DER SEILWINDENZUGKRAFT UND DER BREMSHALTEKRAFT EINER FORSTSEILWINDE**

(30) Priorität: 30.06.2021 DE 102021116863
(71) Anmelder: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE); WELSCHOF, Bernward, 63762 Großostheim (DE)
(74) Vertreter: Patentship Patentanwaltgesellschaft

(57) **Zusammenfassung**

Die Erfindung betrifft eine Seilwindenprüfvorrichtung (35) zur Prüfung der Seilwindenzugkraft (F1) und der Bremshaltekraft (F2) einer Forstseilwinde (2) eines Forstgeräts (1a), insbesondere einer mobilen Forstmaschine (1) oder eines Anbau-Rückeschildes, wobei die Forstseilwinde (2) eine von einem Antriebsmotor (20) antreibbare und mittels einer Bremseinrichtung (24) abbremsbare Seiltrommel (21) aufweist, auf der ein Seil (22) aufgespult ist. Die Seilwindenprüfvorrichtung (35) weist einen Hydraulikprüfzylinder (36) auf, der eine erste Befestigungsschnittstelle (37) aufweist, mit der der Hydraulikprüfzylinder (36) an einem Befestigungspunkt (38) des Forstgeräts (1a) befestigbar ist, und eine zweite Befestigungsschnittstelle (39) aufweist, mit der der Hydraulikprüfzylinder (36) mit dem Seil (22) der Forstseilwinde (2) verbindbar ist.

## Beschreibung

Die Erfindung betrifft eine Seilwindenprüfvorrichtung zur Prüfung der Seilwindenzugkraft und der Bremshaltekraft einer Forstseilwinde eines Forstgeräts, insbesondere einer mobilen Forstmaschine oder eines Anbau-Rückeschilds, wobei die Forstseilwinde eine von einem Antriebsmotor antreibbare und mittels einer Bremseinrichtung abbremsbare Seiltrommel aufweist, auf der ein Seil aufgespult ist.

Die Erfindung betrifft weiterhin ein Forstgerät, insbesondere eine mobile Forstmaschine oder ein Anbau-Rückeschild, mit einer Forstseilwinde, wobei die Forstseilwinde eine von einem Antriebsmotor antreibbare und mittels einer Bremseinrichtung abbremsbare Seiltrommel aufweist, auf der ein Seil aufgespult ist, wobei das Seil von der Seiltrommel zu einer an dem Forstgerät angeordneten Auswerferrolle geführt und über die Auswerferrolle geführt ist.

Die Erfindung betritt weiterhin ein System umfassend ein Forstgerät, insbesondere eine mobile Forstmaschine oder ein Anbau-Rückeschild, mit einer Forstseilwinde, wobei die Forstseilwinde eine von einem Antriebsmotor antreibbare und mittels einer Bremseinrichtung abbremsbare Seiltrommel aufweist, auf der ein Seil aufgespult ist, wobei das Seil von der Seiltrommel zu einer an dem Forstgerät angeordneten Auswerferrolle geführt und über die Auswerferrolle geführt ist, und eine Seilwindenprüfvorrichtung zur Prüfung der Seilwindenzugkraft und der Bremshaltekraft der Forstseilwinde des Forstgeräts.

Die Erfindung betrifft weiterhin ein Verfahren zur Prüfung der Seilwindenzugkraft und der Bremshaltekraft einer Forstseilwinde eines derartigen Systems.

Forstseilwinden stellen ein prüfpflichtiges Arbeitsmittel dar, bei dem eine jährlich wiederkehrende Prüfung der maximalen Seilwindenzugkraft und der Bremshaltekraft vorgeschrieben ist, um beispielsweise Unfallverhütungsvorschriften einzuhalten. Für diese jährlich wiederkehrende Prüfung ist die maximale Seilwindenzugkraft der Forstseilwinde und die Bremshaltekraft der Bremseinrichtung der Forstseilwinde zu bestimmen und nachzuweisen, dass die Bremshaltekraft mindestens 125% der maximalen Seilwindenzugkraft beträgt. Als Bremshaltekraft ist diejenige Seilkraft anzusehen, die zum Rutschen der in der Bremsstellung befindlichen Bremseinrichtung führt.

Für die Prüfung der maximalen Seilwindenzugkraft und der Bremshaltekraft von Forstseilwinden als sogenannter 3-Punkt-Rückeschildwinden ausgebildeten Forstgeräten, die als Anbaugerät an Traktoren angebaut werden, sind entsprechende Prüfstände bekannt. Eine 3-Punkt-Rückeschildwinde ist ein Anbau-Rückeschild zum Anbau an einen 3-Punkt-Kraftheber eines Traktors, das mit einer Fortseilwinde versehen ist. Aus der DE 10 2014 117 956 B3 und der DE 10 2018 125 131 B4 sind entsprechende Prüfstände für die Prüfung von als 3-Punkt-Rückeschildwinden ausgebildeten Forstgeräten bekannt. Die aus der DE 10 2014 117 956 B3 und der DE 10 2018 125 131 B4 bekannten Prüfstände weisen einen auf dem Boden abgestützten Rahmen auf, in dem ein Hydraulikprüfzylinder eingebaut ist und an dem sich die zu prüfende 3-Punkt-Rückeschildwinden an einem Anschlag abstützt. Derartige Prüfstände sind aufwändig aufgebaut und weisen große Abmessungen auf und sind daher entsprechend nur bedingt mobil, so dass 3-Punkt-Rückeschildwinden als Prüflinge für die Prüfung der maximalen Seilwindenzugkraft und der Bremshaltekraft zu dem Prüfstand gebracht werden müssen. Die aus der DE 10 2014 117 956 B3 und der DE 10 2018 125 131 B4 bekannten Prüfstände sind zudem für 3-Punkt-Rückeschildwinden konzipiert und können nicht für die Prüfung einer in einer mobilen Forstmaschine eingebauten Forstseilwinde verwendet werden. Zudem ist die Art der Krafteinleitung und die Abstützung des Prüfstandes auf dem Untergrund bei derartigen Prüfständen nicht optimal. Die aus der der DE 10 2014 117 956 B3 und der DE 10 2018 125 131 B4 bekannten Prüfstände sind so konstruiert, dass sich die 3-Punkt-Rückschildwinde an dem Anschlag des Prüfstandes abstützt und den Prüfstand gegen das Rückeschild zieht bis ein Formschluss zwischen Rückeschild und dem Anschlag des Prüfstandes vorliegt. Bei diesen bekannten Prüfständen ist der Hydraulikprüfzylinder weiterhin hinsichtlich des Kraftflusses nicht optimal angeordnet und der Prüfstand wird während des Prüfablaufs zur Prüfung der maximalen Seilwindenzugkraft und der Bremshaltekraft einem Drehmoment ausgesetzt. Dieses Drehmoment führt dazu, dass sich der Rahmen des Prüfstandes durchbiegt und vom Boden abheben kann. Bei Entlastung der Seilkraft beim Öffnen der Bremseinrichtung knallen die durch das Drehmoment belasteten Bauteile des Prüfstandes gegen den Boden, wodurch hohe Belastungen an dem Prüfstand und als unangenehm empfundene Geräusche entstehen.

Der vorliegenden Erfindung liegt die Aufgabe zugrunde, eine Seilwindenprüfvorrichtung und ein Verfahren zur Prüfung der Seilwindenzugkraft und der Bremshaltekraft einer Forstseilwinde zur Verfügung zu stellen, mit der in einfacher Weise eine geräteinterne Prüfung der Forstseilwinde in dem Forstgerät ermöglicht wird.

Diese Aufgabe wird erfindungsgemäß dadurch gelöst, dass die Seitwindenprüfvorrichtung einen Hydraulikprüfzylinder aufweist, der eine erste Befestigungsschnittstelle aufweist, mit der der Hydraulikprüfzylinder an einem Befestigungspunkt des Forstgeräts befestigbar ist, und eine zweite Befestigungsschnittstelle aufweist, mit der der Hydraulikprüfzylinder mit dem Seil der Forstseilwinde verbindbar ist.

Der erfindungsgemäße Gedanke besteht somit darin, dass bei Forstgeräten, beispielsweise mobilen Forstmaschinen oder Anbau-Rückeschildern, mit einer eingebauten Forstseilwinde die Prüfung der maximalen Seilwindenzugkraft und der Bremshaltekraft direkt an dem Forstgerät und somit geräteintern, beispielweise bei einer mobilen Forstmaschine fahrzeugintern, erfolgen kann, wenn der Hydraulikprüfzylinder mit einer ersten Befestigungsschnittstelle an einem Befestigungspunkt des Forstgeräts befestigt wird. Die erfindungsgemäße Seilwindenprüfvorrichtung besteht somit im Wesentlichen nur noch aus dem Hydraulikprüfzylinder und benötigt keinen schweren und großbauenden Rahmen. Eine derartige, kompakte und damit mobile Seilwindenprüfvorrichtung kann in einfacher Weise zu der zu prüfenden Forstseilwinde und somit zu dem Forstgerät, beispielsweise einer mobilen Forstmaschine oder einem Anbau-Rückeschild, gebracht werden, um eine geräteinterne Prüfung der maximalen Seilwindenzugkraft und der Bremshaltekraft der Forstseilwinde durchzuführen. Gegenüber bekannten Prüfständen weist die erfindungsgemäße Prüfvorrichtung weiterhin einen verbesserten Kraftfluss auf, da die Seilkräfte während des Prüfablaufs direkt in den Hydraulikzylinder eingeleitet werden, so dass beim Öffnen der Bremseinrichtung lediglich geringe Belastungen an der Seilwindenprüfvorrichtung auftreten und keine als unangenehm empfundene Geräusche entstehen.

Gemäß einer vorteilhaften Ausgestaltungsform der Erfindung ist die erste Befestigungsschnittstelle als an dem Hydraulikprüfzylinder ausgebildeter Lagerflansch einer Bolzenverbindung ausgebildet. Der Lagerflansch kann hierzu bevorzugt eine oder mehrere Lagerflanschplatten aufweisen, die jeweils eine Aufnahmebohrung für einen Befestigungsbolzen aufweisen. Mit einer derartigen Befestigungsschnittstelle kann der Hydraulikprüfzylinder in einfacher und schneller Weise an einem entsprechenden Befestigungspunkt des Forstgeräts für die Prüfung der maximalen Seilwindenzugkraft und der Bremshaltekraft befestigt werden. Sofern der Befestigungspunkt des Forstgeräts bereits für andere Bauteile vorgesehen ist, beispielsweise der Befestigungspunkt eine Anlenkung für eine Schwerlastrolle ist, werden somit für die Befestigung des Hydraulikprüfzylinders an dem Forstgerät bereits vorhandenen Bauteile genutzt, die bevorzugt auf die Betriebskräfte der Forstseilwinde ausgelegt sind.

Die zweite Befestigungsschnittstelle ist gemäß einer bevorzugten Ausgestaltungsform der Erfindung als an dem Hydraulikprüfzylinder angeordnete Seilbefestigungsrolle ausgebildet. An einer Seilbefestigungsrolle, beispielsweise einem Umschlingungskopf, um den das Seil mit mehreren Umschlingungen, beispielsweise mindestens drei Umschlingungen, aufgewickelt werden kann, kann in einfacher und schneller Weise der Hydraulikprüfzylinder mit dem Seil verbunden werden und die für die Prüfung der der maximalen Seilwindenzugkraft und der Bremshaltekraft auftretenden Seilkräfte übertragen werden.

Gemäß einer vorteilhaften Ausführungsform der Erfindung weist der Hydraulikprüfzylinder ein Zylindergehäuse und eine in dem Zylindergehäuse verschiebbar angeordnete Kolbenstange auf, wobei die erste Befestigungsschnittstelle an der Kolbenstange und die zweite Befestigungsschnittstelle an dem Zylindergehäuse ausgebildet ist. Ein derartiger Hydraulikprüfzylinder weist einen einfachen Aufbau auf.

Vorteilhafterweise umfasst die Seilwindenprüfvorrichtung eine Druckmesseinrichtung, mit der der Druck in einem zwischen dem Zylindergehäuse und der Kolbenstange ausgebildeten Druckraum erfassbar ist. Mit einer derartigen Druckmesseinrichtung kann in einfacher Weise der Druck in dem Druckraum erfasst werden und für die Prüfung der Forstseilwinde aus dem Druck im Druckraum die maximale Seilwindenzugkraft und die Bremshaltekraft ermittelt bzw. auf diese Kräfte geschlossen werden. Bevorzugt ist die Druckmesseinrichtung als elektronische Druckmesseinrichtung ausgebildet, die die Messdaten an einen Auswertecomputer sendet, in dem die erfassten Drücke während der Prüfung der maximalen Seilwindenzugkraft und der Bremshaltekraft aufgezeichnet und dokumentiert werden.

Gemäß einer vorteilhaften Weiterbildung der Erfindung umfasst die Seilwindenprüfvorrichtung eine Hydraulikpumpe, mittels der der Druckraum unter Druck setzbar ist. Mit der Hydraulikpumpe kann durch ein unter Druck setzen des Druckraums in einfacher Weise auf das mit dem Hydraulikprüfzylinder verbundene Seil eine Zugkraft für die Prüfung der Bremshaltekraft aufgebracht werden.

Gemäß einer vorteilhaften Ausführungsform der Erfindung ist die Hydraulikpumpe als manuell betätigbare Handpumpe ausgebildet. Dies führt zu einer weiteren Vereinfachung des Aufbaus des Hydraulikprüfzylinders und ermöglicht eine Prüfung der Forstseilwinde in einem Forstgerät auch im Gelände, wo ein Stromanschluss für ein Elektropumpenaggregat nicht vorhanden ist.

Die Aufgabe wird bezüglich eines Forstgeräts, insbesondere einer mobilen Forstmaschine oder eines Anbau-Rückeschilds, mit einer Forstseilwinde, wobei die Forstseilwinde eine von einem Antriebsmotor antreibbare und mittels einer Bremseinrichtung abbremsbare Seiltrommel aufweist, auf der ein Seil aufgespult ist, wobei das Seil von der Seiltrommel zu einer an dem Forstgerät angeordneten Auswerferrolle geführt und über die Auswerferrolle geführt ist, erfindungsgemäß dadurch gelöst, dass das Forstgerät mit einem Befestigungspunkt versehen ist, an die der Hydraulikprüfzylinder der Seilwindenprüfvorrichtung anbaubar ist. An einem entsprechenden Befestigungspunkt des Forstgeräts kann für die geräteintere Prüfung, beispielsweise für die fahrzeuginterne Prüfung in einer mobilen Forstmaschine, der maximalen Seilwindenzugkraft und der Bremshaltekraft der Hydraulikprüfzylinder in einfacher und schneller Weise befestigt werden. Sofern der Befestigungspunkt des Forstgeräts bereits für andere Bauteile vorgesehen ist, beispielsweise der Befestigungspunkt eine Anlenkung für eine Schwerlastrolle ist, werden somit für die Befestigung des Hydraulikprüfzylinders an dem Forstgerät bereits vorhandenen Bauteile genutzt, die bevorzugt auf die Betriebskräfte der Forstseilwinde ausgelegt sind.

Gemäß einer bevorzugten Ausführungsform der Erfindung ist der Befestigungspunkt vertikal unterhalb der Auswerferrolle angeordnet. Bevorzugt ist der vertikale Abstand zwischen der Auswerferrolle und dem Befestigungspunkt an dem Forstgerät derart ausgeführt, dass der Hydraulikprüfzylinder mit der Seilbefestigungsrolle zwischen dem Befestigungspunkt und der Auswerferrolle der Forstseilwinde eingebracht werden kann.

Gemäß einer bevorzugten Ausführungsform der Erfindung ist der Befestigungspunkt als Aufnahmeflansch einer Bolzenverbindung ausgebildet. Der Aufnahmeflansch kann hierzu bevorzugt eine oder mehrere Lagerflanschplatten aufweisen, die jeweils eine Aufnahmebohrung für einen Befestigungsbolzen aufweisen. An einem derartigen, als Aufnahmeflansch ausgebildeten Befestigungspunkt kann der Hydraulikprüfzylinder in einfacher und schneller Weise mittels seines Lagerflansches für die Prüfung der maximalen Seilwindenzugkraft und der Bremshaltekraft an dem Forstgerät, beispielsweise einer mobilen Forstmaschine oder einem Anbau-Rückeschild, befestigt werden.

Die Erfindung betrifft weiterhin ein System umfassend ein Forstgerät, insbesondere eine mobile Forstmaschine oder ein Anbau-Rückeschild, mit einer Forstseilwinde, wobei die Forstseilwinde eine von einem Antriebsmotor antreibbare und mittels einer Bremseinrichtung abbremsbare Seiltrommel aufweist, auf der ein Seil aufgespult ist, wobei das Seil von der Seiltrommel zu einer an dem Forstgerät angeordneten Auswerferrolle geführt und über die Auswerferrolle geführt ist, und eine Seilwindenprüfvorrichtung zur Prüfung der Seilwindenzugkraft und der Bremshaltekraft der Forstseilwinde des Forstgeräts. Die Aufgabe wird bei einem derartigen System erfindungsgemäß dadurch gelöst, dass die Seilwindenprüfvorrichtung einen Hydraulikprüfzylinder aufweist, der eine erste Befestigungsschnittstelle aufweist, mit der der Hydraulikprüfzylinder an einem Befestigungspunkt des Forstgeräts befestigbar ist, und eine zweite Befestigungsschnittstelle aufweist, mit der der Hydraulikprüfzylinder mit dem Seil der Forstseilwinde verbindbar ist, und das Forstgerät mit einem Befestigungspunkt versehen ist, an die der Hydraulikprüfzylinder der Seilwindenprüfvorrichtung anbaubar ist.

Die Aufgabe wird hinsichtlich eines Verfahrens zur Prüfung der Seilwindenzugkraft und der Bremshaltekraft einer Forstseilwinde eines oben genannten Systems durch die folgenden Schritte gelöst:
- Befestigen des Hydraulikprüfzylinders der Seilwindenprüfvorrichtung mit der ersten Befestigungsschnittstelle an dem Befestigungspunkt des Forstgeräts,
- Verbinden des Seils der Forstseilwinde mit der zweiten Befestigungsschnittstelle des Hydraulikprüfzylinders der Seilwindenprüfvorrichtung,
- Durchführen der Prüfung der Seilwindenzugkraft und Durchführen der Prüfung der Bremshaltekraft.

Der Hydraulikprüfzylinder wird somit direkt mit der ersten Befestigungsschnittstelle an dem Forstgerät, beispielsweise einer mobilen Forstmaschine oder einem Anbau-Rückeschild, befestigt, so dass nach Verbinden des Seils mit der zweiten Befestigungsschnittstelle des Hydraulikprüfzylinders eine geräteinterne Prüfung der Seilwindenzugkraft und der Bremshaltekraft der in dem Forstgerät eingebauten Fortseilwinde durchgeführt werden kann.

Zur Prüfung der Seilwindenzugkraft wird bevorzugt die Seiltrommel mittels des Antriebsmotors bei in der Lösestellung befindlicher Bremseinrichtung in Seilaufspulrichtung betrieben und mittels der Seilwindenprüfvorrichtung die maximale Seilwindenzugkraft bestimmt. Von dem Antriebsmotor wird somit auf das Seil der Forstseilwinde eine Zugkraft aufgebracht, die mit der Druckmesseinrichtung des Hydraulikprüfzylinders in einfacher Weise ermittelt werden kann.

Zur Prüfung der Bremshaltekraft wird bevorzugt bei in der Bremsstellung befindlicher Bremseinrichtung durch Betätigen der Hydraulikpumpe der Seilwindenprüfvorrichtung die Bremshaltekraft bestimmt. Durch Betätigen der Hydraulikpumpe kann über den Hydraulikprüfzylinder auf das Seil der Forstseilwinde eine Zugkraft aufgebracht werden bis die Bremseinrichtung rutscht und dadurch die Bremshaltekraft der Bremseinrichtung der Forstseilwinde ermittelt werden.

Sofern gemäß einer Weiterbildung des Verfahrens die Bestimmung der Bremshaltekraft mehrmals, insbesondere drei- bis sechsmal, durchgeführt wird und ein Mittelwert der Bremshaltekraft ermittelt wird, können Schwankungen der Bremshaltekraft minimiert werden und die Aussagekraft der Prüfung der Bremshaltekraft erhöht werden.

Weitere Vorteile und Einzelheiten der Erfindung werden anhand des in den schematischen Figuren dargestellten Ausführungsbeispiels näher erläutert. Hierbei zeigt
- Figur 1: ein als mobile Forstmaschine ausgebildetes Forstgerät eines erfindungsgemäßen System in einer perspektivischen Darstellung,
- Figur 2: eine Forstseilwinde des Forstgeräts der Figur 1 in einer schematischen Darstellung,
- Figur 3: einen Ausschnitt des Forstgeräts der Figur 1 mit eingebauter Seilwindenprüfvorrichtung,
- Figur 4: eine Prinzipdarstellung der Figur 3 und
- Figur 5: eine Grafik der gemessen Kräfte/Drücke bei einer Seilwindenprüfung.

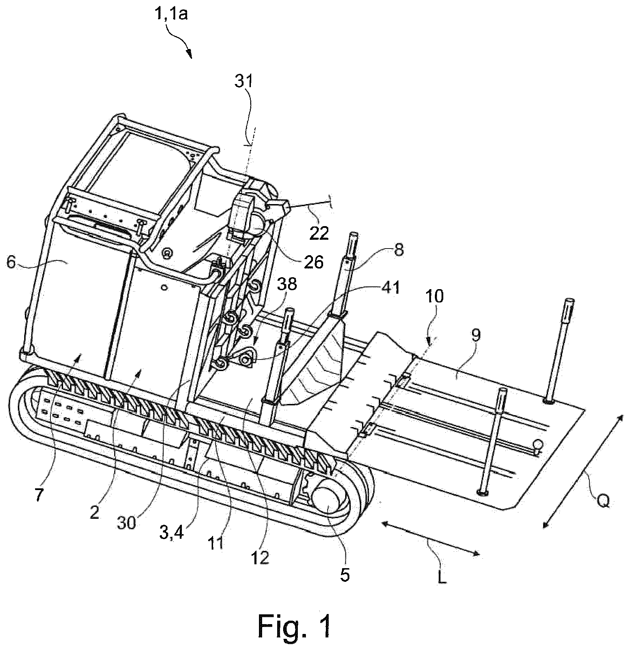

In der Figur 1 ist ein Forstgerät 1a eines erfindungsgemäßen Systems mit einer zu prüfenden Forstseilwinde 2 in einer perspektivischen Darstellung dargestellt. Das Forstgerät 1a ist im dargestellten Ausführungsbeispiel als mobile Forstmaschine 1, insbesondere als ferngesteuerte mobile Forstmaschine, ausgeführt.

Die Forstmaschine 1 umfasst ein Fahrwerk 3, das von Raupenfahrwerken 4 gebildet ist, die jeweils beispielsweise von einem hydraulischen Fahrantriebsmotor 5 angetrieben sind. Die Fahrantriebsmotoren 5 sind in Fahrzeuglängsrichtung L gesehen jeweils am hinteren Ende, d.h. am fahrzeugheckseitigen Ende, der Raupenfahrwerke 4 angeordnet.

Die Forstmaschine 1 weist eine Haube 6 auf, unterhalb der eine Energieversorgungseinrichtung 7 und eine Forstseilwinde 2 angeordnet sind. Die Forstmaschine 1 weist weiterhin eine Runge 8 und ein verstellbares Rampenschild 9 auf, das um eine horizontale Fahrzeugquerachse 10 verstellbar am Fahrzeugheck eines Fahrzeugkörpers 11 angeordnet ist. Die Forstmaschine 1 weist keinen Fahrerarbeitsplatz für einen Bediener auf und ist mittels einer nicht näher dargestellten Fernbedienung von einem Bediener bedienbar. Die Energieversorgungseinrichtung 7 kann einen Verbrennungsmotor aufweisen, der eine oder mehrere Hydraulikpumpen einer Hydraulikanlage der Forstmaschine 1 antreibt, die die Fahrantriebsmotoren 5 und weitere hydraulische Verbraucher der Forstmaschine 1 versorgen.

Bei der erfindungsgemäßen Forstmaschine 1 sind in Fahrzeuglängsrichtung L gesehen vorne an der Fahrzeugfront die Energieversorgungseinrichtung 7, benachbart zur Energieversorgungseinrichtung 7 die Forstseilwinde 2, benachbart zur Forstseilwinde 2 die Runge 8 und am Fahrzeugheck das verstellbare Rampenschild 9 angeordnet. Die Forstseilwinde 2 in somit in Fahrzeuglängsrichtung L gesehen zwischen der Runge 8 und der Energieversorgungseinrichtung 7 angeordnet.

Die Runge 8 ist in vertikaler Richtung oberhalb einer Bodenplatte 12 des Fahrzeugkörpers 11 angeordnet.

Die Energieversorgungseinrichtung 7 und die Forstseilwinde 2 sind in einer vorderen Hälfte der Forstmaschine 1 angeordnet. Die Bodenplatte 12 mit der darauf befindlichen Runge 8 bildet eine hintere Hälfte der Forstmaschine 1.

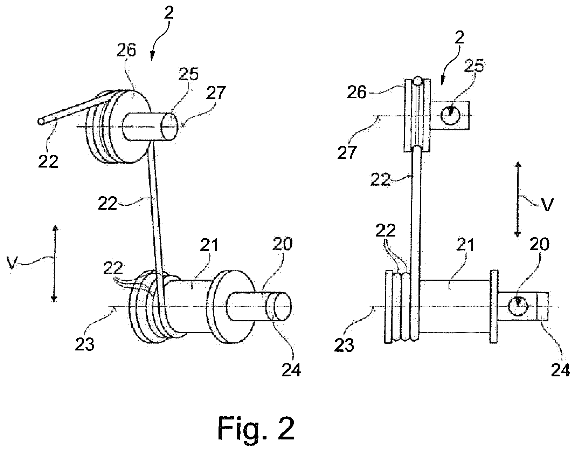

In der Figur 2 ist die Forstseilwinde 2 des Forstgeräts 1a der Figur 1 in einer schematischen Darstellung gezeigt. Die linke Darstellung der Figur 2 zeigt eine perspektivische Darstellung und die rechte Darstellung eine Vorderansicht der erfindungsgemäße Forstseilwinde 2.

Die Forstseilwinde 2 weist eine von einem Antriebsmotor 20 angetriebene Seiltrommel 21 auf, auf der ein Seil 22, beispielsweise ein Stahlseil, aufgespult ist. Die Seiltrommel 21 ist um eine Drehachse 23 drehbar angeordnet und von dem Antriebsmotor 20 angetrieben. Der Antriebsmotor 20 kann beispielsweise als Hydraulikmotor ausgebildet sein.

Die Seiltrommel 3 der Forstseilwinde 2 steht weiterhin mit einer Bremseinrichtung 24 in Wirkverbindung. Die Bremseinrichtung 24 ist beispielsweise als Federspeicherbremse ausgebildet, die von einer Federeinrichtung in Richtung einer Bremsstellung und von einem hydraulischen Bremslösedruck oder einem Elektromagnet in Richtung einer Lösestellung beaufschlagt ist.

Die Forstseilwinde 2 weist weiterhin eine Auswerferrolle 26 auf, die von einem weiteren Antriebsmotor 25 angetrieben sein kann. Die Auswerferrolle 26 ist um eine Drehachse 27 drehbar angeordnet. Der gegebenenfalls vorhandene Antriebsmotor 25 kann beispielsweise als Hydraulikmotor ausgebildet sein.

Das Seil 22 ist von der Seiltrommel 21 in vertikaler Richtung V zu der Auswerferrolle 26 geführt, über die Auswerferrolle 26 geführt und an der Auswerferrolle 26 derart umgelenkt, dass das Seil 22 von der Auswerferrolle 26 weggeführt ist.

Der Antriebsmotor 20 der Seiltrommel 21 und der gegebenenfalls vorhandene Antriebsmotor 25 der Auswerferrolle 26 stehen zur Energieversorgung mit der Energieversorgungseinrichtung 7 der Forstmaschine in Verbindung.

Die Auswerferrolle 26 ist - wie aus der Figur 1 ersichtlich ist - an der Oberseite einer vertikalen Querwand 30 des Fahrzeugkörpers 11 der Forstmaschine 1 angeordnet, die sich in Fahrzeugquerrichtung Q der Forstmaschine 1 erstreckt und zwischen der vorderen Hälfte und der hinteren Hälfte der Forstmaschine 1 angeordnet ist. Die Auswerferrolle 26 ist in dem in der Figur 1 dargestellten Ausführungsbeispiel um eine vertikale Schwenkachse 31 schwenkbar an der Oberseite der vertikalen Querwand 30 angeordnet.

Die Seiltrommel 21 ist innerhalb der Haube 6 angeordnet.

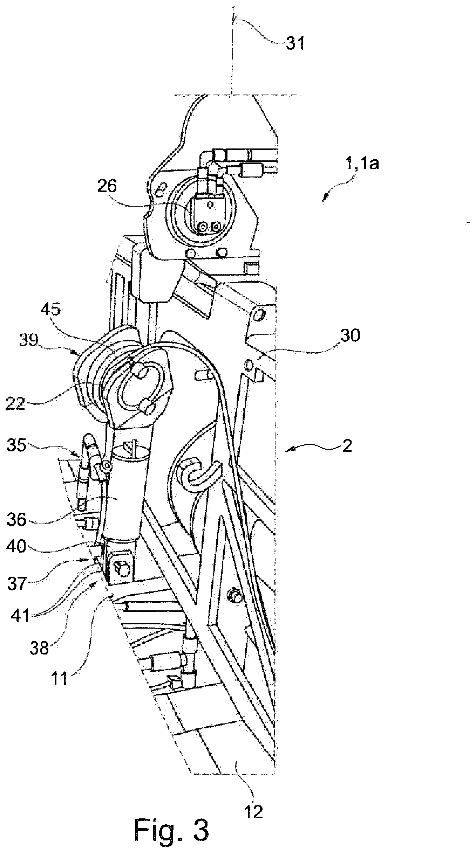

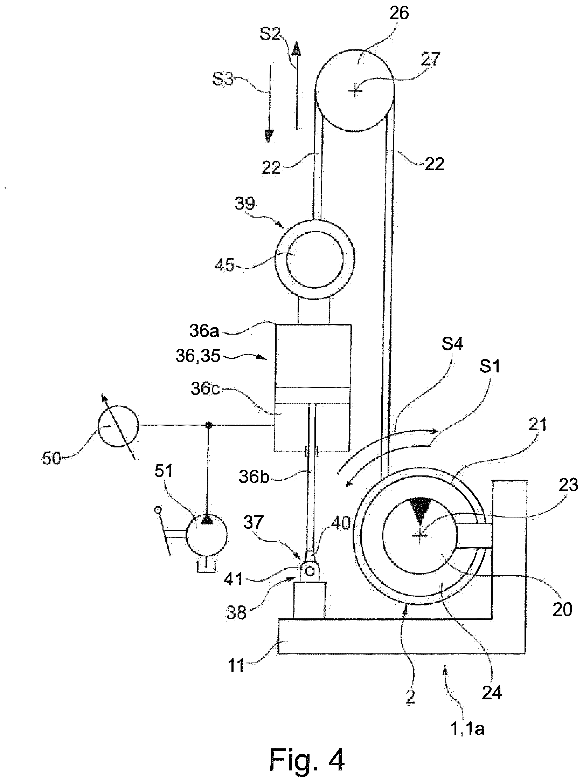

In den Figuren 3 und 4 ist eine erfindungsgemäße Seilwindenprüfvorrichtung 35 eines erfindungsgemäßen Systems zur Prüfung der Seilwindenzugkraft und der Bremshaltekraft der in dem Forstgerät 1a eingebauten Forstseilwinde 2 dargestellt.

Die Seilwindenprüfvorrichtung 35 weist einen Hydraulikprüfzylinder 36 auf, der eine erste Befestigungsschnittstelle 37 aufweist, mit der der Hydraulikprüfzylinder 36 an einem Befestigungspunkt 38 des Forstgeräts 1a befestigbar ist, und der eine zweite Befestigungsschnittstelle 39 aufweist, mit der der Hydraulikprüfzylinder 36 mit dem Seil 22 der Forstseilwinde 2 verbindbar ist.

Die erste Befestigungsschnittstelle 37 ist als an dem Hydraulikprüfzylinder 36 ausgebildeter Lagerflansch 40 einer Bolzenverbindung ausgebildet.

Der Befestigungspunkt 38 des Forstgeräts 1a ist an diesem vertikal unterhalb der Auswerferrolle 26 angeordnet.

Wie aus den Figuren 1, 3 und 4 ersichtlich ist, ist der Befestigungspunkt 38 des Forstgeräts 1a als Aufnahmeflansch 41 einer Bolzenverbindung ausgebildet. Im dargestellten Ausführungsbeispiel besteht der Aufnahmeflansch 41 aus zwei in Fahrzeugquerrichtung Q beabstandet angeordneten Lagerflanschplatten, die jeweils eine Aufnahmebohrung für einen Befestigungsbolzen aufweisen. Der Lagerflansch 40 des Hydraulikprüfzylinders 36 ist von einer einzelnen Lagerflanschplatte mit einer Aufnahmebohrung für den Befestigungsbolzen versehen, die zwischen die beiden Lagerflanschplatten des Befestigungspunktes 38 eingeführt und mittels des Befestigungsbolzens an dem Befestigungspunkt 38 befestigt werden kann.

Die zweite Befestigungsschnittstelle 39 ist als an dem Hydraulikprüfzylinder 36 angeordnete Seilbefestigungsrolle 45 ausgebildet. Die Seilbefestigungsrolle 45 ist im dargestellten Ausführungsbeispiel als Umschlingungskopf ausgeführt, um den das Seil 22 der Forstseilwinde 2 mit mehreren Umschlingungen, beispielsweise mindestens drei Umschlingungen, aufgewickelt werden kann.

Der Hydraulikprüfzylinder 36 weist ein Zylindergehäuse 36a und eine in dem Zylindergehäuse 36a verschiebbar angeordnete Kolbenstange 36b aufweist. Zwischen dem Zylindergehäuse 36a und einem an der Kolbenstange 36b angeordneten Kolben ist ein Druckraum 36c ausgebildet. Im dargestellten Ausführungsbeispiel ist die erste Befestigungsschnittstelle 37 an der Kolbenstange 36b und die zweite Befestigungsschnittstelle 39 an dem Zylindergehäuse 36a ausgebildet.

Mit dem Druckraum 36c ist eine Druckmesseinrichtung 50 der Seilwindenprüfvorrichtung 35 verbunden, mit der der Druck in dem Druckraum 36c erfassbar ist. Die Druckmesseinrichtung 50 ist bevorzugt als elektronische Druckmesseinrichtung ausgebildet, die die Messdaten an einen nicht näher dargestellten Auswertecomputer sendet, in dem die erfassten Drücke im Druckraum 36c während der Prüfung der maximalen Seilwindenzugkraft und der Bremshaltekraft aufgezeichnet und dokumentiert werden.

Die Seilwindenprüfvorrichtung 35 umfasst weiterhin eine Hydraulikpumpe 51, mittels der der Druckraum 36c unter Druck setzbar ist. Im dargestellten Ausführungsbeispiel ist die Hydraulikpumpe 51 als manuell betätigbare Handpumpe ausgebildet.

Zur Prüfung der Seilwindenzugkraft und der Bremshaltekraft der in dem Forstgerät 1a, im dargestellten Ausführungsbeispiel der mobilen Forstmaschine 1, eingebauten Forstseilwinde 2 wird der Hydraulikprüfzylinders 36 der Seilwindenprüfvorrichtung 35 mit der ersten Befestigungsschnittstelle 37 an dem Befestigungspunkt 38 des Forstgeräts 1a befestigt und das von der Seiltrommel 21 bis auf die unterste Seillage abgespulte Seil 22 mit der zweiten Befestigungsschnittstelle 39 des Hydraulikprüfzylinders 36 der Seilwindenprüfvorrichtung 35 verbunden, so dass die Prüfung der Seilwindenzugkraft der Forstseilwinde 2 und die Prüfung der Bremshaltekraft der Bremseinrichtung 24 der Forstseilwinde 2 durchgeführt werden kann.

Zur Prüfung der Seilwindenzugkraft der Forstseilwinde 2 wird die Seiltrommel 21 mittels des Antriebsmotors 20 bei in der Lösestellung befindlicher Bremseinrichtung 24 in Seilaufspulrichtung (Pfeil S1 in der Figur 4) betrieben und mittels der Seilwindenprüfvorrichtung 35 die maximale Seilwindenzugkraft bestimmt, d.h. die maximale Seilzugkraft, die von dem Antriebsmotor 20 der Seiltrommel 21 an dem Seil 22 in Seilaufspulrichtung erzeugt werden kann. Durch die von dem Antriebsmotor 20 in Seilaufspulrichtung (Pfeil S1 in der Figur 4) betriebene Seiltrommel 21 wird auf das Seil 22 eine Zugkraft in Richtung des Pfeils S2 aufgebracht, so dass die Seilwinde 2 mit dem Seil 22 gegen den Hydraulikprüfzylinder 35 zieht, wodurch in dem Druckraum 36c ein Druckanstieg erfolgt.

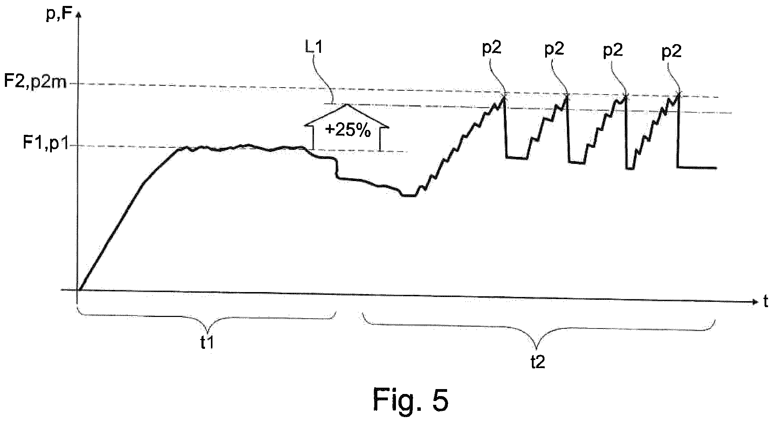

In der Figur 5 sind die mit der Druckmesseinrichtung 50 gemessenen Drücke in dem Druckraum 36c über die Zeit t während der Prüfung der Seilwindenzugkraft und der Prüfung der Bremshaltekraft dargestellt. In dem Zeitabschnitt t1 erfolgt die Prüfung der Seilwindenzugkraft F1 und in dem Zeitabschnitt t2 die Prüfung der Bremshaltekraft F2.

In dem Zeitabschnitt t1, in dem die Prüfung der Seilwindenzugkraft F1 erfolgt, steht im Druckraum 36c ein Druck p1 an, der einer maximalen Seilwindenzugkraft F1 entspricht.

Zur Prüfung der Bremshaltekraft der Bremseinrichtung 24 der Forstseilwinde 2 wird in dem Zeitabschnitt t2 bei in der Bremsstellung befindlicher Bremseinrichtung 24 durch Betätigen der Hydraulikpumpe 51 der Seilwindenprüfvorrichtung 25 die Bremshaltekraft der Bremseinrichtung 24 der Forstseilwinde 2 bestimmt.

Durch Betätigen der Hydraulikpumpe 51 wird der Druck in dem Druckraum 36c erhöht, so dass der Hydraulikprüfzylinder 35 an dem Seil 22 in Richtung des Pfeils S3 zieht. Durch Betätigen der Hydraulikpumpe 51 wird hierbei der Druck im Druckraum 36c soweit erhöht, bis die Bremseinrichtung 24 rutscht, wodurch sich die Seiltrommel 21 in Seilabspulrichtung (Pfeil S4 in der Figur 4) dreht.

In der Figur 5 sind hierbei in dem Zeitabschnitt t2 die einzelnen Pumpstöße der als Handpumpe ausgebildeten Hydraulikpumpe 51 dargestellt, die zu einer stufenartigen Erhöhung des Druckes in dem Druckraum 36c führen und mit den Sternen die jeweiligen Bremshaltedrücke p2 dargestellt, bei denen die Bremseinrichtung 24 durchrutscht.

Wie aus der Figur 5 ersichtlich ist, wird die Bestimmung der Bremshaltekraft mehrmals, im dargestellten Ausführungsbeispiel viermal, durchgeführt und aus den jeweiligen Bremshaltedrücken p2 ein Mittelwert p2m ermittelt bzw. aus den jeweiligen Bremshaltekräften ein Mittelwert ermittelt, der einer Bremshaltekraft F2 entspricht.

Sofern die Bremshaltekraft F2 um mindestens 25% größer als die Seilwindenzugkraft F1 ist, d.h. die Bremshaltekraft F2 mindestens 125% (siehe Linie L1 in der Figur 5) der maximalen Seilwindenzugkraft F1 ist, erfüllt die Forstseilwinde 2 die Vorgaben der Prüfung.

Die erfindungsgemäße Seilwindenprüfvorrichtung 35, die lediglich aus dem Hydraulikprüfzylinder 36, der Hydraulikpumpe 51 und der Druckmesseinrichtung 50 besteht, ist äußerst kompakt und daher mobil, so dass die erfindungsgemäße Seilwindenprüfvorrichtung 35 zu dem Forstgerät 1a gebracht werden kann, um die in dem Forstgerät 1a eingebaute Forstseilwinde 2 zu prüfen. Darüber hinaus erlaubt die erfindungsgemäße Seilwindenprüfvorrichtung 35 ein Verfahren, das in Verbindung mit dem die Seiltrommel 21 antreibenden Antriebsmotor 20 und der die Seiltrommel 21 abbremsenden Bremseinrichtung 24 des Forstgeräts 1a äußerst robuste, wiederholbare Aussagen zu den Zugkräften und den Bremskräften der Forstseilwinde 2 ermöglicht.

Für die Prüfung der Forstseilwinde 2 werden die in dem Forstgerät 1a befindliche Auswerferrolle 26 und der bereits vorhandene, im unteren Bereich befindliche Befestigungspunkt 38 für die Aufhängung einer Schwerlastrolle, genutzt, die beide auf die Betriebskräfte der Forstseilwinde 2 ausgelegt sind.

Der vertikale Abstand der Auswerferrolle 26 und des Befestigungspunktes 38 an dem Forstgerät 1a ist so groß ausgelegt, dass der Hydraulikprüfzylinder 36 mit der als Seilbefestigungsrolle 45 ausgebildeten Befestigungsschnittstelle 39 eingebracht werden kann, die bei ausgespultem Seil eine Krafteingriffsmöglichkeit an dem Seil 22 bietet. Der Hydraulikprüfzylinder 36 mit der Druckmesseinrichtung 50 weist die Funktion einer Kraftmessdose auf, mit dem einerseits die maximale Seilwindenzugkraft F1 ermittelt werden kann und andererseits mit Hilfe der Hydraulikpumpe 51 die Bremshaltekraft F2 ermittelt werden kann, die nötig ist, um die Bremseinrichtung 24 zum Rutschen zu bringen.

Die Prüfung der maximalen Seilwindenzugkraft F1 und der Bremshaltekraft F2 der Forstseilwinde 2 kann mit der erfindungsgemäßem Seilwindenprüfvorrichtung 35 direkt in dem Forstgerät 1a und in einfacher und leichter Weise durch ein Prüfpersonal durchgeführt werden.

Die Erfindung ist nicht auf das in den Figuren dargestellte Ausführungsbeispiel beschränkt, bei dem das Forstgerät 1a als mobile Forstmaschine 1 ausgebildet ist. Das Forstgerät 1a kann alternativ als Anbau-Rückeschild, beispielsweise als 3-Punkt-Anbau-Rückeschild (3-Punkt-Rückeschildwinde) ausgeführt sein, das eine eingebaute Forstseilwinde 2, eine Auswerferrolle 26 und einen Befestigungspunkt 38 aufweist und bei dem der vertikale Abstand zwischen der Auswerferrolle 26 und dem Befestigungspunkt 38 an dem Anbau-Rückeschild so groß ausgelegt ist, dass der Hydraulikprüfzylinder 36 mit der als Seilbefestigungsrolle 45 ausgebildeten Befestigungsschnittstelle 39 eingebracht werden kann.

## Patentansprüche

1. Seilwindenprüfvorrichtung (35) zur Prüfung der Seilwindenzugkraft (F1) und der Bremshaltekraft (F2) einer Forstseilwinde (2) eines Forstgeräts (1a), insbesondere einer mobilen Forstmaschine (1) oder eines Anbau-Rückeschilds, wobei die Forstseilwinde (2) eine von einem Antriebsmotor (20) antreibbare und mittels einer Bremseinrichtung (24) abbremsbare Seiltrommel (21) aufweist, auf der ein Seil (22) aufgespult ist, **dadurch gekennzeichnet, dass** die Seilwindenprüfvorrichtung (35) einen Hydraulikprüfzylinder (36) aufweist, der eine erste Befestigungsschnittstelle (37) aufweist, mit der der Hydraulikprüfzylinder (36) an einem Befestigungspunkt (38) des Forstgeräts (1a) befestigbar ist, und eine zweite Befestigungsschnittstelle (39) aufweist, mit der der Hydraulikprüfzylinder (36) mit dem Seil (22) der Forstseilwinde (2) verbindbar ist.

2. Seilwindenprüfvorrichtung nach Anspruch 1, **dadurch gekennzeichnet, dass** die erste Befestigungsschnittstelle (37) als an dem Hydraulikprüfzylinder (36) ausgebildeter Lagerflansch (40) einer Bolzenverbindung ausgebildet ist.

3. Seilwindenprüfvorrichtung nach Anspruch 1 oder 2, **dadurch gekennzeichnet, dass** die zweite Befestigungsschnittstelle (39) als an dem Hydraulikprüfzylinder (36) angeordnete Seilbefestigungsrolle (45) ausgebildet ist.

4. Seilwindenprüfvorrichtung nach einem der Ansprüche 1 bis 3, **dadurch gekennzeichnet, dass** der Hydraulikprüfzylinder (36) ein Zylindergehäuse (36a) und eine in dem Zylindergehäuse (36a) verschiebbar angeordnete Kolbenstange (36b) aufweist, wobei die erste Befestigungsschnittstelle (37) an der Kolbenstange (36b) und die zweite Befestigungsschnittstelle (39) an dem Zylindergehäuse (36a) ausgebildet ist.

5. Seilwindenprüfvorrichtung nach einem der Ansprüche 1 bis 4, **dadurch gekennzeichnet, dass** die Seilwindenprüfvorrichtung (35) eine Druckmesseinrichtung (50) umfasst, mit der der Druck in einem zwischen dem Zylindergehäuse (36a) und der Kolbenstange (36b) ausgebildeten Druckraum (36c) erfassbar ist.

6. Seilwindenprüfvorrichtung nach Anspruch 5, **dadurch gekennzeichnet, dass** die Seilwindenprüfvorrichtung (35) eine Hydraulikpumpe (51) umfasst, mittels der der Druckraum (36c) unter Druck setzbar ist.

7. Seilwindenprüfvorrichtung nach Anspruch 6, **dadurch gekennzeichnet, dass** die Hydraulikpumpe (51) als manuell betätigbare Handpumpe ausgebildet ist.

8. Forstgerät (1a), insbesondere mobile Forstmaschine (1) oder Anbau-Rückeschild, mit einer Forstseilwinde (2), wobei die Forstseilwinde (2) eine von einem Antriebsmotor (20) antreibbare und mittels einer Bremseinrichtung (24) abbremsbare Seiltrommel (21) aufweist, auf der ein Seil (22) aufgespult ist, wobei das Seil (22) von der Seiltrommel (21) zu einer an dem Forstgerät (1a) angeordneten Auswerferrolle (26) geführt und über die Auswerferrolle (26) geführt ist, **dadurch gekennzeichnet, dass** das Forstgerät (1a) mit einem Befestigungspunkt (38) versehen ist, an die der Hydraulikprüfzylinder (36) der Seilwindenprüfvorrichtung (35) nach einem der Ansprüche 1 bis 7 anbaubar ist.

9. Forstgerät nach Anspruch 8, **dadurch gekennzeichnet, dass** der Befestigungspunkt (38) vertikal unterhalb der Auswerferrolle (26) angeordnet ist.

10. Forstgerät nach Anspruch 8 oder 9, **dadurch gekennzeichnet, dass** der Befestigungspunkt (38) als Aufnahmeflansch (41) einer Bolzenverbindung ausgebildet ist.

11. System umfassend ein Forstgerät (1a), insbesondere eine mobile Forstmaschine (1) oder ein Anbau-Rückeschild, mit einer Forstseilwinde (2), wobei die Forstseilwinde (2) eine von einem Antriebsmotor (20) antreibbare und mittels einer Bremseinrichtung (24) abbremsbare Seiltrommel (21) aufweist, auf der ein Seil (22) aufgespult ist, wobei das Seil (22) von der Seiltrommel (21) zu einer an dem Forstgerät (1a) angeordneten Auswerferrolle (26) geführt und über die Auswerferrolle (26) geführt ist, insbesondere ein Forstgerät (1a) nach einem der Ansprüche 8 bis 10, und eine Seilwindenprüfvorrichtung (35) zur Prüfung der Seilwindenzugkraft (F1) und der Bremshaltekraft (F2) der Forstseilwinde (2) des Forstgeräts (1a), insbesondere einer Seilwindenprüfvorrichtung nach einem der Ansprüche 1 bis 7, **dadurch gekennzeichnet, dass** die Seilwindenprüfvorrichtung (35) einen Hydraulikprüfzylinder (36) aufweist, der eine erste Befestigungsschnittstelle (37) aufweist, mit der der Hydraulikprüfzylinder (36) an einem Befestigungspunkt (38) des Forstgeräts (1a) befestigbar ist, und eine zweite Befestigungsschnittstelle (39) aufweist, mit der der Hydraulikprüfzylinder (36) mit dem Seil (22) der Forstseilwinde (2) verbindbar ist, und das Forstgerät (1a) mit einem Befestigungspunkt (38) versehen ist, an die der Hydraulikprüfzylinder (36) der Seilwindenprüfvorrichtung (35) anbaubar ist.

12. Verfahren zur Prüfung der Seilwindenzugkraft (F1) und der Bremshaltekraft (F2) einer Forstseilwinde (2) eines Systems nach Anspruch 11, **gekennzeichnet durch** die folgenden Schritte:
• Befestigen des Hydraulikprüfzylinders (36) der Seilwindenprüfvorrichtung (35) mit der ersten Befestigungsschnittstelle (37) an dem Befestigungspunkt (38) des Forstgeräts (1a),
• Verbinden des Seils (22) der Forstseilwinde (2) mit der zweiten Befestigungsschnittstelle (39) des Hydraulikprüfzylinders (36) der Seilwindenprüfvorrichtung (35),
• Durchführen der Prüfung der Seilwindenzugkraft (F1) und Durchführen der Prüfung der Bremshaltekraft (F2).

13. Verfahren nach Anspruch 12, **dadurch gekennzeichnet, dass** zur Prüfung der Seilwindenzugkraft (F1) die Seiltrommel (21) mittels des Antriebsmotors (20) bei in der Lösestellung befindlicher Bremseinrichtung (24) in Seilaufspulrichtung betrieben wird und mittels der Seilwindenprüfvorrichtung (35) die maximale Seilwindenzugkraft (F1) bestimmt wird.

14. Verfahren nach Anspruch 12 oder 13, **dadurch gekennzeichnet, dass** zur Prüfung der Bremshaltekraft (F2) bei in der Bremsstellung befindlicher Bremseinrichtung (24) durch Betätigen der Hydraulikpumpe (51) der Seilwindenprüfvorrichtung (35) die Bremshaltekraft (F2) bestimmt wird.

15. Verfahren nach Anspruch 14, **dadurch gekennzeichnet, dass** die Bestimmung der Bremshaltekraft (F2) mehrmals, insbesondere drei- bis sechsmal, durchgeführt wird und ein Mittelwert der Bremshaltekraft (F2) ermittelt wird.
